# EUROPEAN PATENT SPECIFICATION

(11) **EP 0 404 194 B1**
(45) Date of publication and mention of the grant of the patent: **20.04.1994**
(21) Application number: 90111921.4
(22) Date of filing: 22.06.1990
(51) Int. Cl.: B62J 7/02, B60K 11/00

(54) **Storage arrangement for scooter**
Ablageeinrichtung für Motorroller
Dispositif de stockage pour scooters

(30) Priority: 22.06.1989 JP 161818/89
(43) Date of publication of application: 27.12.1990
(73) Proprietor: YAMAHA HATSUDOKI KABUSHIKI KAISHA, Iwata-shi Shizuoka-ken, 438 (JP)
(72) Inventor: Taki, Nori, c/o Yamaha Hatsudoki K.K., Shizuoka-ken 438 (JP); Aoki, Hiroyuki, c/o Yamaha Hatsudoki K.K., Shizuoka-ken 438 (JP)
(74) Representative: Grünecker, Kinkeldey, Stockmair & Schwanhäusser Anwaltssozietät

(56) References cited:
- EP-A- 0 262 912
- FR-A- 2 636 293
- GB-A- 2 184 990
- GB-A- 2 210 340
- US-A- 4 817 749

## Description

This invention relates to a scooter comprising front and rear wheels and a frame supporting a power unit and seat assembly carried by the frame and adapted to accommodate a rider and a passenger, said seat assembly covering a storage compartment positioned beneath said seat assembly, said storage compartment having an upwardly facing access opening covered by said seat assembly.

Two wheeled motor vehicles are quite popular for a variety of purposes. One of the more popular vehicles of this type is the motor scooter that employs a motorized, relatively small vehicle that is designed primarily to accommodate only a rider or a rider and a single passenger. Frequently, however, it is necessary to carry additional equipment and the use of a storage compartment for such vehicles will serve this purpose. However, the storage compartments previously proposed have either been too small, have not had a large enough access opening to them, or the closure for the large access opening has been quite heavy to operate.

From GB-A-2 210 340, EP-A-O 262 912, GB-A-2 184 990 and US-A-4 817 749 motor scooters or motor cycles are known which each comprise a storage compartment beneath a continuous seat bench hingely supported at one end thereof in order to render the storage compartment accessible. Said arrangements, however require the complete seat bench to be pivoted to allow access to the storage compartment which renders the operation more cumbersome. Moreover, frequently said constructions do not lead to a large access opening and a sufficiently voluminous accommodating space provided through storage compartment.

Therefore it is an objective of the present invention to equip a scooter as indicated above with an arrangement allowing a storage compartment to be provided that has a large storage volume and is easily accessible.

Said objective, according to the present invention, is performed in that the seat assembly comprises physically separate front and rear seat portions wherein at least said rear portion being pivotably supported to be movable between a closed position in which it closes said access opening and an opened position, in which said storage compartment is accessible.

Preferred embodiments of the present invention are laid down in the further sub-claims.

In the following the present invention is explained in greater detail by means of two embodiments thereof in conjunction with the accompanying drawings, wherein:
Figure 1 is a side elevational view of a motor scooter constructed in accordance with a first embodiment of the invention,
Figure 2 is a top plan view of the motor scooter with portions of the body removed and other portions broken away and shown in section,
Figure 3 is an enlarge side elevational view of the seat portion of the scooter and adjacent components, with certain portions shown in section and portions broken away,
Figure 4 is a partial side elevational view, looking from the side opposite that of Figures 1 and 3,
Figure 5 is a top plan view, with portions shown in section, showing the filler neck for the fuel tank and the associated closure member therefor,
Figure 6 is a cross sectional view taken along a vertically extending plane and looking from the rear of the scooter in the area of the fill neck for the fuel tank,
Figure 7 is a cross sectional view showing the sealing relationship between the rear seat portion and the storage compartment, and
Figure 8 is a side elevational view, in part similar to Figure 3, with portions broken away and shown in section of another embodiment of the invention.

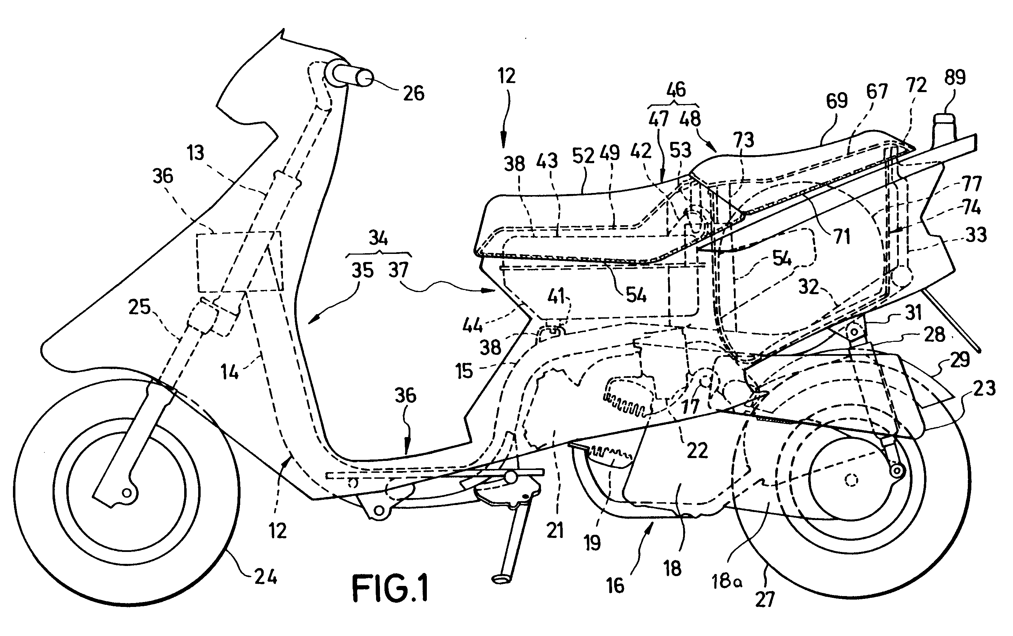

Referring first to the embodiment of Figures 1 through 7, a motor scooter constructed in accordance with this embodiment is identified generally by the reference numeral 11. The motor scooter 11 includes a frame assembly, indicated generally by the reference numeral 12 and which is comprised of a head pipe 13 to which a main tube 14 having a goose neck configuration is affixed, as by welding. A pair of side tubes 15 are affixed at their forward ends, as by welding, to the lower central portion of the main tube 14 and curve upwardly and extend rearwardly.

A power unit, indicated generally by the reference numeral 16 is supported beneath these frame members 15 on a pivot bolt 17. The power unit 16 includes an internal combustion engine having a combined crankcase transmission assembly 18 and one or more forwardly inclined cylinders 19. A cylinder head assembly 21 is affixed to the cylinder block 19 in a known manner.

The engine of the power unit 16 is provided with an induction system that includes a carburetor 22 that draws air through a side and rearwardly positioned air cleaner silencer assembly 23. Since the construction of the power unit 16 per se forms no part of the invention, a further description of it is believed to be unnecessary to permit those skilled in the art to understand the construction and operation of the invention.

A front wheel 24 is rotatably journaled in a suitable manner at the lower end of a front fork 25. The front fork 25 is, in turn, dirigibly supported by the head tube 13 in a known manner and carries a pair of handlebars 26 at its upper end by which the front wheel 24 may be steered.

The engine crankcase transmission assembly 18 drives a variable belt transmission contained within a casing 18a which, in turn, drives a rear wheel 27 that is journaled for rotation by this casing 18a. It has been previously noted that the power unit 16 is pivotally mounted on the frame assembly 12 by means of the pivot pin 17. This pivotal movement is restrained by a pair of combined spring and shock absorber assemblies 28 that are interposed between the casing 18a and the frame assembly 12 for suspension travel of the rear wheel 27. A fender 29 is affixed to the casing 18a and thus travels with the wheel 27 during its suspension movement.

Each combined spring shock absorber assembly 28 is fixed at its upper end by means of a bracket 31 to a frame member 32 that extends at each side back from the frame members 15. An upstanding frame member 33 extends from the rear ends of the frame members 32.

A body cover, indicated generally by the reference numeral 34 encloses at least in part the frame assembly 12 and some of the running components thus far described. This body cover 34 includes a front portion 35 that enclosed a battery 36 carried by the front of the frame assembly 12, the head pipe 13 and a portion of the front fork 25. This portion 35 also forms a leg shield for the feet of a rider which can be positioned on a platform 36 formed at the rear end of the portion 35. The body cover 34 also includes a rear portion 37 that encloses the frame members 15 and a portion of the power unit 16.

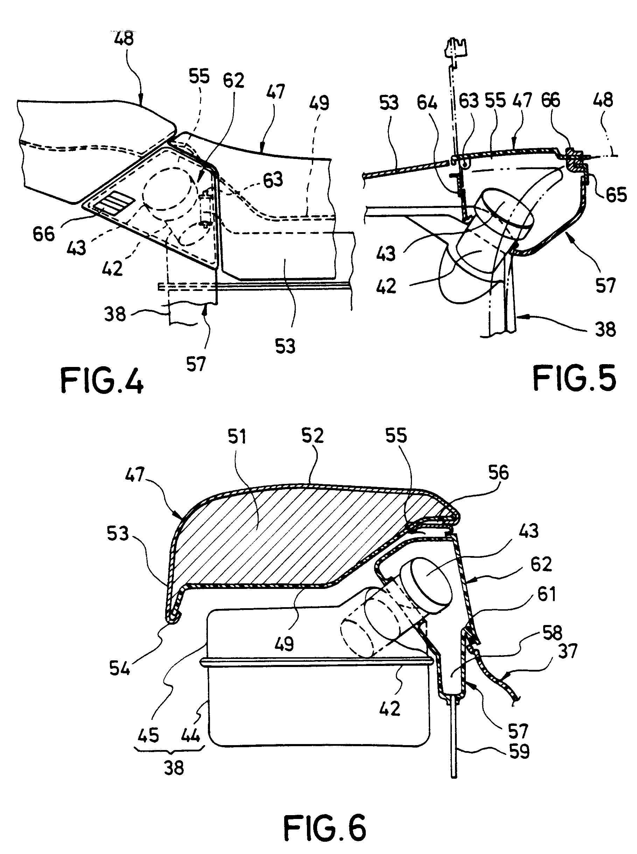

A fuel tank 38 is carried by the frame assembly 12 and specifically by the frame members 15 on brackets 39 and elastic isolators 41. The fuel tank 38 extends over the power unit 16 and specifically its forward end and has a rearwardly and sidewardly disposed filler neck 42 to which a detachable cap 43 is affixed. As may be best seen in Figure 6, the fuel tank 38 is formed from a pair of sheet metal stampings including a lower member 44 and an upper member 45 that are connected to each other by means of peripheral flanges. The filler neck 42 is connected to the upper member 45.

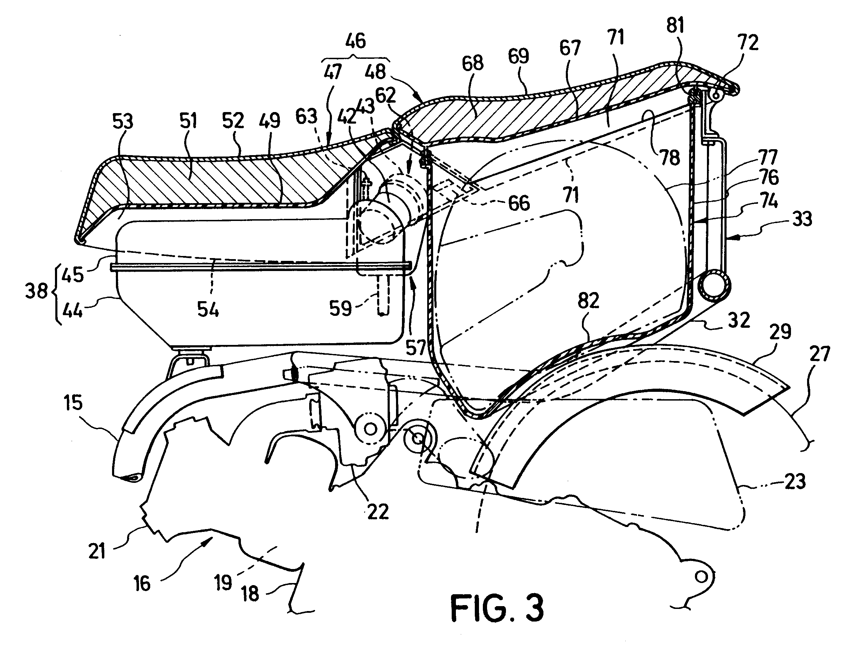

A seat assembly, indicated generally by the reference numeral 46 is mounted on the frame assembly 12, in a manner to be described, for accommodating an operator and, if desired, a single passenger. This seat 46 is of a two piece construction and includes a front portion 47 and a rear portion 48. Referring in detail primarily to Figures 3 and 6, the front seat portion 47 is disposed immediately behind the foot area 36 and has sufficient length so as to accommodate not only the operator but also so as to fully overlie the fuel tank 38. The seat portion 47 is comprised of a relatively rigid backing piece 49 to which a foam or other cushion stuffing material 51 is affixed. A covering 52 overlies this cushioning 51 and has downwardly depending skirt portions 53 that terminate in flaps 54 that are affixed to the backing 49 in a suitable manner, as by an adhesive. A seat lock 53 depends from the seat 47 and specifically the backing piece 49 and is interlocked into openings (not shown) in a bracket that is affixed to an upstanding frame member 54 so as to detachably affix the front seat portion 47 to the frame 12.

It should be noted that the side portions 53 of the front seat 47 overlie the sides of the top part 45 of the fuel tank 38 and conceal the portion of it which is not concealed by the body cover part 37. However, to afford access to the fill neck 42, a cut out 55 is formed at the rear of the seat 47 and at the one side where the fill neck 42 is located. This cut out 55 shows in most detail in Figures 4 through 6. A plate 56 is affixed to the lower portion of the seat backing piece 49 adjacent the cut out 55 and carries an overflow receptacle 57 that has a trap portion 58 which, in turn, will receive any fuel that may overflow the filler neck 42. This accumulated fuel is then drained through a drain tube 59 which terminates at a low portion in the scooter 11 and preferably at a point below the cylinder block 19.

The receptacle 57 further defines an opening 61 that is generally coextensive with the cut out 55. A closure member 62 is provided for selectively closing the opening 61 and cut out 55 when fuel is not being added. The closure member 62 is pivotally journaled for movement between its closed and open positions by means of a hinge assembly 63 which, in turn, is connected to a plate 64 that is affixed to the leading side of the receptacle 57. A keeper 65 is affixed to the opposite edge of the receptacle 57 on the opposite side of the opening 61 and a slidable latch member 66 carried by the closure 62 cooperates with the keeper 65 so as to hold the closure 62 in its closed position as shown in the figures. When the latch 66 is released, the closure 62 may be pivoted to an open position as shown in phantom in Figure 5 for accessing the fill neck 42 and cap 43.

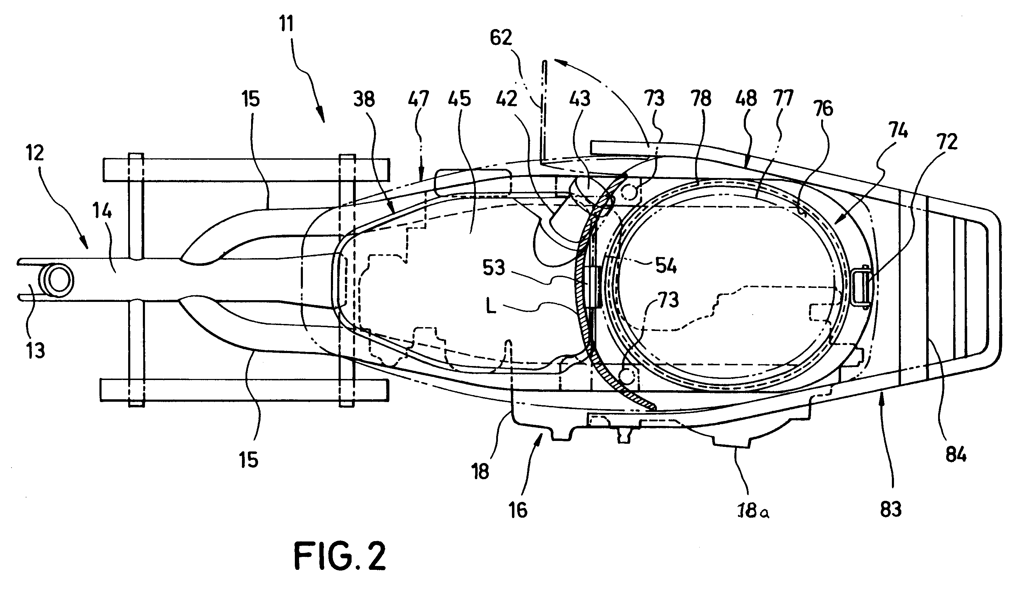

As may be best seen in Figures 1, 3 and 7, the rear seat portion 48 has a construction generally similar to that of the front seat portion 47, although the configuration is different. That is, the rear seat portion 48 is comprised of a lower backing piece 67 to which a padding material 68 such as a foamed plastic is affixed. A covering 69 having side portions 71 overlies the cushioning material 68 and has flaps 71 that overlie and are affixed to the backing piece 67 in a suitable manner. As should be noted from Figure 2, the forward edge of the rear seat 48 is curved and fits into a curved recess formed in the rear portion of the front seat 47 so that when the seat portions 47 and 48 are in their normal position, it provides a neat and continuous appearing surface. This curvature is shown by the line L in Figure 2.

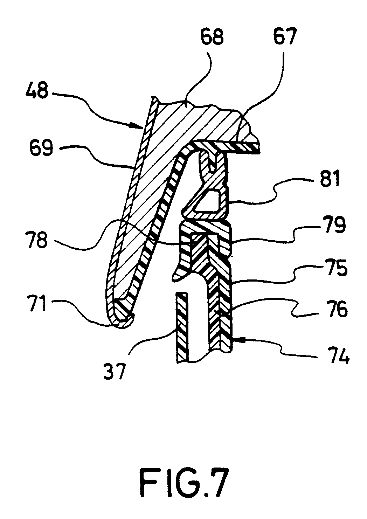

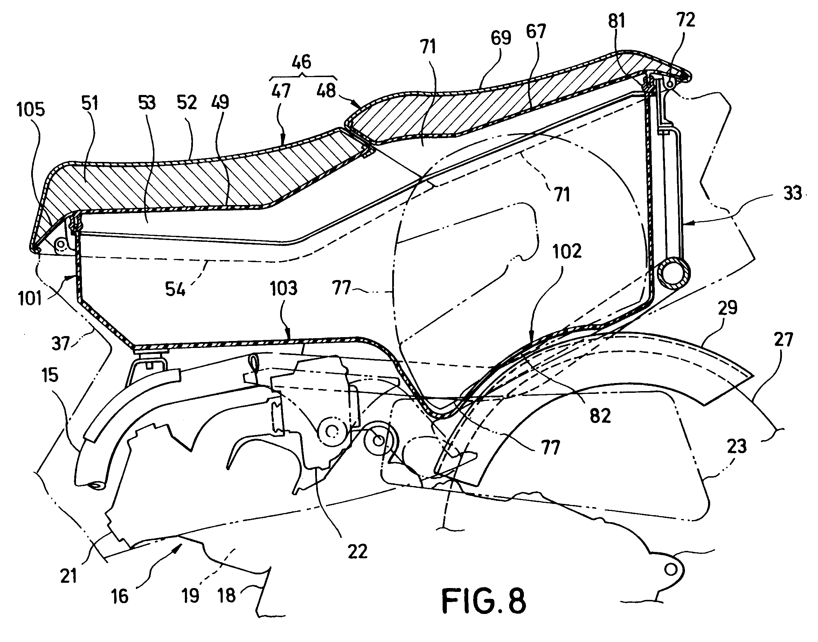

The rear seat portion 48 is pivotally connected to the frame assembly 12 by means of a hinge assembly 72 that is affixed to the upper end of the frame member 33. In its normal closed position, the front of the seat 48 is supported on the frame member 54 by means of a pair of elastic stops 73 (Figures 1 and 3). The reason for pivotally supporting the rear seat 48 is that it provides a closure for a carrier receptacle, indicated generally by the reference numeral 74 and which is positioned therebeneath within the body covering portion 37. The receptacle 74 may be formed from a rigid plastic and has a double wall construction comprised of an inner member 75 and an outer member 76 (Figure 7). These members define a cavity which is configured so as to accept an article such as a rider's helmet 77 as shown in phantom in the figures. The members 75 and 76 define an upstanding wall having an opening at its upper end that is defined by a flange 78 (Figure 8) to which a sealing gasket 79 is affixed. The gasket 79 is adapted to be engaged by a corresponding gasket 81 affixed to the underside of the seat backing member 67 so as to provide a watertight seal for its internal cavity.

It should be noted that the opening 78 is inclined to the horizontal so as to provide a relatively large opening even though the seat portion 48 has a relatively short length. In addition, the lower wall of the enclosure 74 has a somewhat dome shaped configuration, as indicated at 82 in Figure 3 so as to afford clearance for the suspension movement of the rear fender 29. A grab rail 83 having a cross piece 84 is affixed to the rear body covering portion 37 so as to provide a gripping area for a passenger seated on the rear seat 48.

In the embodiment of the invention as thus far described, the storage compartment has been positioned beneath the rearward seat portion and the fuel tank was positioned beneath the forward seat portion. An even larger storage compartment can be accommodated if the fuel tank is mounted elsewhere and Figure 8 shows such an embodiment. Because of the similarity of this embodiment to the embodiments previously described, the same reference numerals have been utilized to identify the same components. Also, since this embodiment relates only to the storage compartment and the manner of accessing it, only this portion of the vehicle has been shown in Figure 8. The other portions of the vehicle may be assumed to be the same as that previously described and common components have been identified by the same reference numerals.

In this embodiment, a storage compartment 101 is provided that extends substantially beneath not only the rear seat portion 48 but also underneath the front seat portion. The storage compartment 101 is provided with a rear section indicated generally by the reference numeral 102 that has a configuration which is the same as the total storage compartment of the previous embodiment and which is designed so as to contain a helmet 77. However, rather thin the front wall of the storage compartment of the previous embodiment, this embodiment has a front portion 103 which extends beneath the front seat portion 47. This front storage compartment portion 103 carries a bracket 104 on its forward surface that provides a hinge 105 for journaling the front seat portion 47 for movement between a closed position and an opened position. This front seat portion also carries a gasket that cooperates with the front storage compartment portion 103 to provide an effective seal. Hence, the total storage capacity is readily accessible, but there are two separate closures for it, the front seat portion 47 and the rear seat portion 48. Thus, the weight of the closure member is substantially halved, than if the entire seat would have to be pivoted to access the storage areas 103 and 102. A great range of convenience is offered by this arrangement.

It should be readily apparent from the foregoing description that the embodiments of the invention illustrated and described provide a very large storage capacity and one which is accessed through a pivotally supported seat or seat portion which is relatively light in weight since neither closure constitutes the entire seat.

## Claims

1. A scooter (11) comprising front and rear wheels (24,27) and a frame (12) supporting a power unit (16) and seat assembly (46) carried by the frame (12) and adapted to accommodate a rider and a passenger, said seat assembly (46) covering a storage compartment (74,101) positioned beneath said seat assembly (46), said storage compartment (74,101) having an upwardly facing access opening (78) openably covered by said seat assembly (46),
**characterised in that,** said seat assembly (46) comprises physically separate front and rear seat portions (47,48), at least said rear seat portion (48) being pivotably supported to be movable between a closed position in which it closes said access opening (78) and an opened position in which said storage compartment (74,101) is accessible.

2. A scooter as claimed in claim 1, **characterised in that,** said rear seat portion (48) extending inclined at an acute angle to the horizontal.

3. A scooter as claimed in claims 1 or 2, **characterised in that,** said storage compartment (74) is positioned beneath the rear seat portion (48) and a fuel tank (38) is positioned beneath the front seat portion (47).

4. A scooter as claimed in claim 3, **characterised in that,** said fuel tank (38) has a fill neck (42) which is accesible through an opening (61) at the side of the front seat portion (47), said opening (61) being closed by a closure member (62) that is movable between a closed position and an opened position.

5. A scooter as claimed in at least one of the preceding claims 1 to 4, **characterised in that,** the rear seat portion (48) is hingely supported at its rear side adjacent to the rear of the storage compartment (74,101).

6. A scooter as claimed in at least one of the preceding claims 1 to 5, **characterised in that,** a forward edge (68) of the rear seat portion (48) is curved to fit into a curved recess formed in the rear portion of the front seat portion (47).

7. A scooter as claimed in at least one of the preceding claims 2, 5 and 6, **characterised in that,** the storage compartment (101) and its access opening (78) extends beneath both front and rear seat portions (47,48), and that the front seat portion (47) is pivotably supported to close a forward portion of the storage compartment (101) when being in its normal riding position and to open said forward portion of the storage compartment (101) when being pivoted in its opened position.

8. A scooter as claimed in claim 7, **characterised in that,** the rearward seat portion (48) is pivotably supported adjacent to the rear of the storage compartment (101) and the front seat portion (47) is pivotably supported adjacent to the front of the storage compartment (101).

9. A scooter as claimed in at least one of the preceding claims 1 to 8, **characterised in that,** a adjoining line between the front seat portion (47) and the rear seat portion (48) extends at an acute angle to the horizontal when viewed in side elevation.

10. A scooter as claimed in at least one of the preceding claims 1 to 9, **characterised in that,** a lower wall (82) of the storage compartment (74,101) extends at least in part into an area between the engine (18) of the power unit (16) and a forward portion of the rear wheel (27).

11. A scooter as claimed in at least one of the preceding claims 1 to 10, **characterised in that,** the rear seat portion (48) extends along a level higher than that of the front seat portion (47).

## Patentansprüche

1. Motorroller (11) mit Vorder- und Hinterrädern (24, 27) und einem Rahmen (12), der eine Antriebseinheit (16) lagert, und einer Sitzanordnung (46), getragen durch den Rahmen (12) und vorgesehen, um einen Fahrer und einen Passagier aufzunehmen, wobei die Sitzanordnung (46) ein Lagerungsabteil (74, 101) abdeckt, das unterhalb der Sitzanordnung (46) angeordnet ist, wobei das Lagerungsabteil (74, 101) eine nach oben weisende Zutrittsöffnung (78) aufweist, die durch die Sitzanordnung (46) so abgedeckt wird, daß sie durch diese geöffnet werden kann, **dadurch gekennzeichnet**, daß die Sitzanordnung (46) körperlich getrennte Vorder- und Rücksitzabschnitte (47, 48) aufweist, wobei zumindest der Rücksitzabschnitt (48) schwenkbar gelagert ist, so daß der zwischen einer Schließstellung, in der er die Zutrittsöffnung (78) verschließt, und einer Offenstellung, in der das Lagerungsabteil (74, 101) zugänglich ist, bewegbar ist.

2. Motorroller nach Anspruch 1, **dadurch gekennzeichnet**, daß der Rückschnittabschnitt (48) sich unter einem spitzen Winkel geneigt zur Horizontalen erstreckt.

3. Motorroller nach Anspruch 1 oder 2, **dadurch gekennzeichnet**, daß das Lagerungsabteil (74) unterhalb des Rücksitzabschnittes (48) angeordnet ist und ein Kraftstofftank (38) unterhalb des Vordersitzabschnittes (47) angeordnet ist.

4. Motorroller nach Anspruch 3, **dadurch gekennzeichnet**, daß der Kraftstofftank (38) einen Einfüllhals (42) aufweist, der durch eine Öffnung (61) an der Seite des Vordersitzabschnittes (47) zugänglich ist, wobei die Öffnung (61) durch ein Verschlußteil (62) verschossen ist, das zwischen einer geschlossenen Stellung und einer geöffneten Stellung bewegbar ist.

5. Motorroller nach zumindest einem der vorhergehenden Ansprüche 1 bis 4, **dadurch gekennzeichnet**, daß der Rücksitzabschnitt (48) gelenkig an seiner Rückseite benachbart zum rückseitigen Ende des Lagerungsabteiles (74, 101) gelagert ist.

6. Motorroller nach zumindest einem der vorhergehenden Ansprüche 1 bis 5, **dadurch gekennzeichnet**, daß eine Vorderkante (68) des Rücksitzabschnittes (48) gekrümmt ist, um in eine gerkümmte Ausnehmung zu passen, die in dem hinteren Abschnitt des Vordersitzabschnittes (47) ausgebildet ist.

7. Motorroller nach zumindest einem der vorhergehenden Ansprüche 2, 5 und 6, **dadurch gekennzeichnet**, daß das Lagerungsabteilung (101) und seine Zutrittsöffnung (78) sich unterhalb sowohl des Vorder- als auch des Rücksitzabschnittes (47, 48) erstrecken, und daß der Vordersitzabschnitt (47) schwenkbar gelagert ist, um einen Vorderabschnitt des Lgerungsabteiles (101) zu verschließen, wenn der Vordersitzabschnitt in seiner normalen Fahrposition ist, und den Vorderabschnitt des Lagerungsabteiles (101) zu öffnen, wenn er in seiner geöffneten Stellung ist.

8. Motorroller nach Anspruch 7, **dadurch gekennzeichnet**, daß der Rücksitzabschnitt (48) benachbart zur Rückseite des Lagerungsabteiles (101) schwenkbar gelagert ist und daß der Vordersitzabschnitt (47) benachbart zu der Vorderseite des Lagerungsabteiles (101) schwenkbar gelagert ist.

9. Motorroller nach zumindest einem der vorhergehenden Ansprüche 1 bis 8, **dadurch gekennzeichnet**, daß eine Verbindungslinie zwischen dem Vordersitzabschnitt (47) und dem Rücksitzabschnitt (48) sich unter einem spitzen Winkel zur Horizontalen, gesehen in Seitenrichtung, erstreckt.

10. Motorroller nach zumindest einem der vorgehenden Ansprüche 1 bis 9, **dadurch gekennzeichnet**, daß eine untere Wandung (82) des Lagerungsabteiles (74, 101) sich zumindest teilweise in einen Bereich zwischen dem Motor (18) der Antriebseinheit (16) und einen vorderen Abschnitt des Hinterrades (27) hineinerstreckt.

11. Motorroller nach zumindest einem der vorhergehenden Ansprüche 1 bis 10, **dadurch gekennzeichnet**, daß der Rücksitzabschnitt (48) sich entlang eines Niveaus erstreckt, das höher ist als dasjenige des Vordersitzabschnittes (47).

## Revendications

1. Scooter (11) comprenant des roues avant et arrière (24, 27) et un châssis (12) portant une unité de motorisation (16), et un assemblage de siège (46) porté par le châssis (12) et conçu pour recevoir un conducteur et un passager, ledit assemblage de siège (46) couvrant un compartiment de stockage (74, 101) placé sous ledit assemblage de siège (46), ledit compartiment de stockage (74, 101) ayant une ouverture (78) d'accès faisant face vers le haut, couverte, de manière à pouvoir être ouverte, par ledit assemblage de siège (46), caractérisé en ce que ledit assemblage de siège (46) comprend des portions de siège avant et arrière (47, 48) physiquement séparées, ladite portion arrière (48) de siège au moins étant montée de manière à pouvoir pivoter entre une position fermée dans laquelle elle ferme ladite ouverture d'accès (78) et une position ouverte dans laquelle ledit compartiment de stockage (74, 101) est accessible.

2. Scooter selon la revendication 1, caractérisé en ce que ladite portion arrière (48) de siège est inclinée à un angle aigu vers l'horizontale.

3. Scooter selon la revendication 1 ou 2, caractérisé en ce que ledit compartiment de stockage (74) est placé sous la portion arrière (48) du siège, et un réservoir à carburant (38) est placé sous la portion avant (47) du siège.

4. Scooter selon la revendication 3, caractérisé en ce que ledit réservoir à carburant (38) a un goulot de remplissage (42) qui est accessible au moyen d'une ouverture (61) sur le côté de la portion avant (47) du siège, ladite ouverture (61) étant fermée par un élément de fermeture (62) qui est mobile entre une position fermée et une position ouverte.

5. Scooter selon l'une au moins des revendications précédentes 1 à 4, caractérisé en ce que la portion arrière (48) du siège est supportée par des charnières sur son côté arrière à côté de l'arrière du compartiment de stockage (74, 101).

6. Scooter selon l'une au moins des revendications précédentes 1 à 5, caractérisé en ce qu'un bord avant (68) de la portion arrière (48) du siège est courbé pour entrer dans un creux courbe formé dans la portion arrière de la portion avant (47) du siège.

7. Scooter selon l'une au moins des revendications précédentes 2, 5 et 6, caractérisé en ce que le compartiment de stockage (101) et son ouverture d'accès (78) s'étendent à la fois sous la portion avant (47) et sous la portion arrière (48) du siège, et en ce que la portion avant (47) du siège est supportée, de manière à pouvoir pivoter, pour fermer une portion avant du compartiment de stockage (101) lorsqu'elle dans sa position normale de conduite, et pour ouvrir ladite portion avant du compartiment de stockage (101) lorsqu'elle est placé par pivotement, dans sa position ouverte.

8. Scooter selon la revendication 7, caractérisé en ce que la portion arrière (48) du siège est montée, de manière à pouvoir pivoter, à côté de l'arrière du compartiment de stockage (101), et la portion avant (47) du siège est montée, de manière à pouvoir pivoter, à côté de l'avant du compartiment de stockage (101).

9. Scooter selon l'une quelconque des revendications précédentes 1 à 8, caractérisé en ce que, vue de côté, une ligne de jonction entre la portion avant (47) du siège et la portion arrière (48) du siège s'étend, selon un angle aigu, vers l'horizontale.

10. Scooter selon l'une au moins des revendications précédentes 1 à 9, caractérisé en ce qu'une paroi inférieure (82) du compartiment de stockage (74, 101) s'étend au moins partiellement dans une zone comprise entre le moteur (18) de l'unité de motorisation (16) et une portion avant de la roue arrière (27).

11. Scooter selon l'une au moins des revendications précédentes 1 à 10, caractérisé en ce que la portion arrière (48) du siège s'étend le long d'un niveau plus haut que celui de la portion avant (47) du siège.
